# DEMANDE DE BREVET EUROPEEN

(11) **EP 1 310 651 A1**
(43) Date de publication de la demande: **14.05.2003**
(21) Numéro de dépôt: 02292772.7
(22) Date de dépôt: 06.11.2002
(51) Int. Cl.: F02D 33/02, F02B 37/12, F02B 37/24, F02D 23/00

(54) **Procédé de réglage d'un turbocompresseur d'un moteur suralimenté**

(30) Priorité: 07.11.2001 FR 0114388
(71) Demandeur: Renault s.a.s., 92100 Boulogne Billancourt (FR)
(72) Inventeur: Fontvieille, Laurent, 91700 Sainte Geneviève des Bois (FR); Nijenhuis, Wouter, 91360 Epinay sur Orge (FR)

(57) **Abrégé**

Un signal de régulation (60) d'un turbocompresseur de moteur suralimenté est remplacé par un signal d'état extrême (64) quand un état transitoire de régime du moteur est détecté, en supplantant temporairement le signal de commande, pour exiger une différence de pression maximale à travers la turbine. Il devient possible de programmer une faible différence de pression à travers la turbine aux bas régimes et basses vitesses pour réduire la consommation de carburant et le débit des gaz d'échappement, sans perdre des qualités de reprise du moteur aux accélérations.

## Description

Il sera ici exposé un procédé de réglage d'un turbocompresseur de moteur suralimenté.

Les moteurs suralimentés utilisés notamment dans certains modèles d'automobiles comprennent un réglage du turbocompresseur pour s'adapter aux différents régimes rencontrés : c'est ainsi qu'aux faibles régimes, le débit de gaz d'échappement qui traverse la turbine fournit trop peu d'énergie pour entraîner le turbocompresseur et porter l'air traversant le compresseur à la pression souhaitée, si aucun réglage n'est fait. Un dispositif classique de réglage continu du turbocompresseur comprend des ailettes pivotantes situées à la section d'entrée de la turbine de façon à modifier la section d'ouverture offerte aux gaz d'échappement vers la turbine, le rapport de détente des gaz à travers la turbine et finalement l'énergie gagnée pour comprimer l'air aspiré. Le rapport de détente, corrélé à un état de plus ou moins grande ouverture des ailettes, doit pouvoir être modifié à chaque instant d'après les conditions de fonctionnement et de commande du moteur. Une tige de commande assure le pivotement des ailettes ; elle est commandée principalement à partir d'un signal mesurant la pression dans le collecteur d'admission de l'air dans le moteur, entre le compresseur et la culasse du moteur, appliqué à une unité de calcul qui délivre un signal de commande à un dispositif d'actionnement pouvant consister en une électrovanne située entre une pompe à vide et un piston lié à la tige : en ouvrant l'électrovanne, la dépression de commande s'accroît, le piston est aspiré et la tige déplacée.

La régulation continue de la pression de l'air au collecteur implique de disposer d'une pression de consigne en fonction du régime et de ramener sans cesse la pression mesurée au collecteur à la pression de consigne. Différents moyens de calcul et d'asservissement ont été prévus pour assurer ces fonctions.

On observe toutefois que le réglage des turbocompresseurs ne peut pas être fait de la meilleure façon pour tous. les régimes possibles. En effet, la fermeture des ailettes a pour inconvénient d'augmenter la consommation de carburant et le débit massique de gaz polluants. Le turbocompresseur devrait être fermé en régime transitoire pour mieux récupérer l'énergie de détente des gaz d'échappement avant de l'exploiter comme énergie d'accélération, mais ouvert au ralenti pour limiter la consommation de carburant et l'émission des gaz polluants. Cela n'est toutefois pas le cas dans les systèmes rencontrés aujourd'hui, en raison de ce que le réglage ne peut pas être accompli avec une précision suffisante pendant les régimes transitoires, où la célérité de fermeture des ailettes devrait être grande. Il ressort de cette insuffisance que la pression mesurée au collecteur ne converge à la pression de consigne que bien après la fin du régime transitoire, généralement avec des instabilités de nature oscillatoire qui font apparaître des "overshoots" ou dépassements de la pression de consigne, qui peuvent menacer le système du moteur si les surpressions sont excessives.

On se résigne donc aujourd'hui à imposer un état de grande fermeture des ailettes aux bas régimes et basses vitesses, contredisant le précepte d'économie indiqué plus haut pour sauvegarder une commande satisfaisante des ailettes pendant les régimes transitoires. On s'accommode ainsi d'un fonctionnement imparfait du turbocompresseur qui favorise le maintien de moyens de régulation théoriquement moins intéressants que les ailettes, comme la dérivation des gaz d'échappement, mais qui sont moins difficiles à réguler convenablement.

On a déjà proposé d'améliorer l'asservissement PID (proportionnel, intégral, différentiel) classique de la fonction temporelle de la différence entre la pression de consigne et la pression effectivement mesurée au collecteur du moteur en ne recourant qu'à des termes proportionnels et différentiels pour les régimes transitoires et qu'à des termes proportionnels et intégraux pour les régimes stabilisés. Le résultat n'a pas été aussi bon qu'on aurait pu l'espérer et n'a pas permis de résoudre le problème de l'excès de carburant et de gaz polluants aux bas régimes et faibles charges.

L'invention offre cependant une solution à ce problème et permet en particulier de bien commander un turbocompresseur en régime transitoire à partir d'un état de grande ouverture des ailettes aux bas régimes et aux basses vitesses.

La solution repose sur la constatation qu'une idée fondamentale de l'asservissement classique est (paradoxalement) de stabiliser la commande des ailettes, ce qui est nécessaire aux régimes stabilisés, mais devient néfaste aux régimes transitoires. Comme le signal de commande issu de l'asservissement ne peut manquer de refléter cette idée, il est proposé dans l'invention de l'ignorer complètement et de le supplanter par un signal fixe de commande du rapport d'ouverture des ailettes pendant que subsistent des conditions qui permettent de détecter un état transitoire.

Un état transitoire peut être détecté quand la différence entre la pression de consigne et la pression mesurée dépasse un seuil. L'application de l'invention a pour effet d'accélérer la fermeture des ailettes et donc l'accroissement de la pression de l'air au collecteur en stimulant la compression, ce qui pourrait faire craindre des "overshoots" plus forts à la fin du régime transitoire ; or on a plutôt observé qu'ils étaient réduits.

L'invention sera décrite en référence aux figures suivantes :

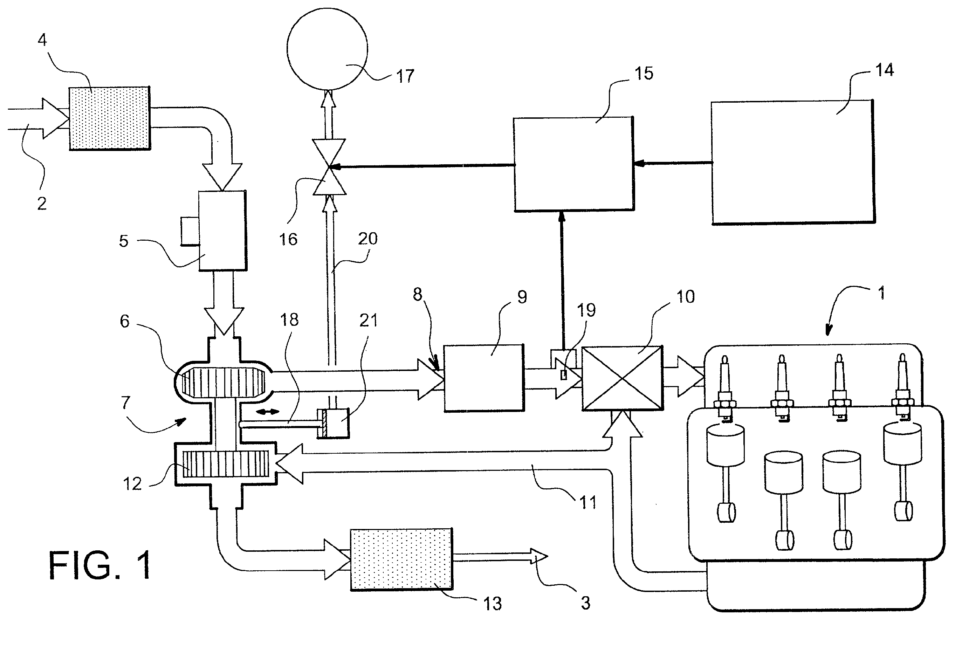

- la figure 1 illustre un système à moteur suralimenté,
- la figure 2 illustre un dispositif d'asservissement classique du turbocompresseur,
- la figure 3 illustre le complément apporté au dispositif avec l'invention,
- et la figure 4 illustre un asservissement obtenu.

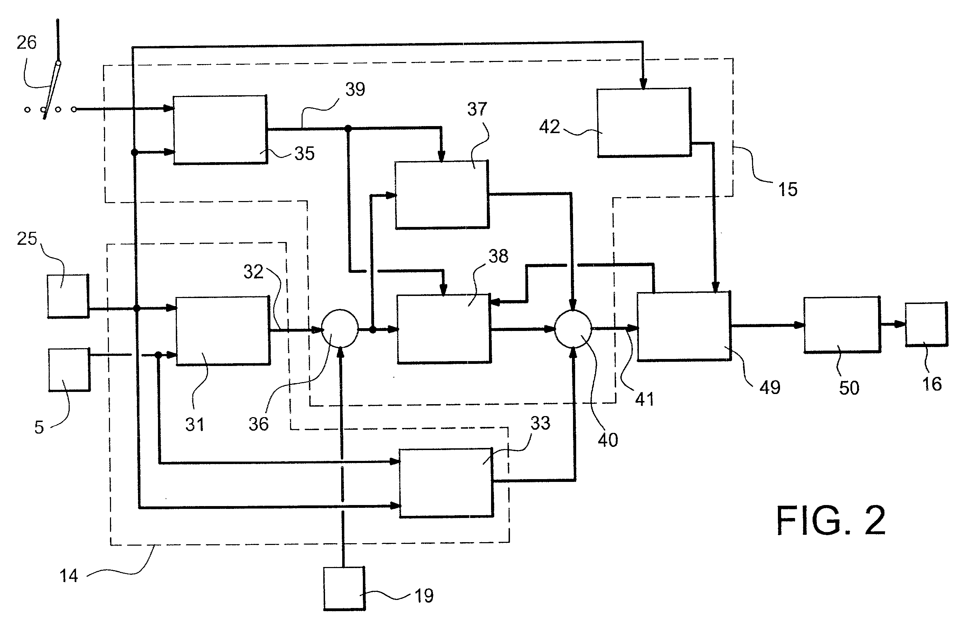

Un moteur à explosion 1 est alimenté en air frais par une entrée 2 et rejette les gaz brûlés par un échappement 3. L'air frais passe par un filtre 4 et un débitmètre 5 avant d'entrer dans un compresseur 6 d'un turbocompresseur 7 à régler. Il entre dans un collecteur 8 après avoir été comprimé, passe par un refroidisseur 9 d'air suralimenté et par une vanne 10 de recirculation des gaz d'échappement. les gaz d'échappement s'écoulent par un collecteur 11 de gaz d'échappement avant de traverser une turbine 12 du turbocompresseur 7 et un filtre à particules 13, et de parvenir à l'échappement 3. On désigne par 14 une unité de calcul responsable en particulier du calcul d'une pression de consigne, par 15 un régulateur de pression, par 16 une électrovanne, par 17 une pompe à vide et par 18 une tige de régulation du turbocompresseur 7. Un capteur 19 du pression est placé sur le collecteur 8 d'air et fournit une pression mesurée à cet endroit au régulateur 15, qui reçoit encore une pression de consigne de l'unité de calcul 14. Le régulateur 15 fournit un signal de commande à l'électrovanne 16, qui ouvre ou ferme une conduite 20 d'aspiration entre une chambre 21 derrière la tige 18 et la pompe à vide 17 ; l'électrovanne est à ouverture progressive et peut donc faire varier à volonté la pression dans la chambre 21 et donc l'enfoncement de la tige 18. Tous ces éléments mécaniques étant connus de l'homme du métier, ils ne seront pas décrits davantage. On passe plutôt au commentaire de la figure 2.

L'unité de calcul 14 reçoit des signaux d'entrée provenant de la demande du conducteur 5 et d'un tachymètre 25 et représentatifs du débit de carburant admis et du régime du moteur ; elle dispose d'une carte 31, c'est-à-dire d'une table à deux valeurs d'entrée où une fonction tridimensionnelle programmée auparavant et invariable donne une première valeur de pression de consigne en fonction des deux valeurs d'entrée introduites à une sortie 32. Les signaux de débit et de régime du moteur sont aussi fournis à une carte dite de pré-positionnement 33 qui délivre une valeur de pré-régulation de l'électrovanne 16 (pouvant être exprimée en pourcentage de pleine ouverture des ailettes) à une sortie 34. Cette valeur de pré-régulation de l'électrovanne 16 a pour utilité principale de maintenir l'électrovanne 16 non loin de la valeur de régulation finale qui lui sera appliquée et donc de stabiliser l'asservissement ; elle est insensible à la différence entre la pression de consigne et la pression au collecteur. La première valeur de pression de consigne est modifiée de la façon qu'on va décrire pour tenir compte d'autres paramètres et du fonctionnement du moteur aux instants immédiatement antérieurs.

Le régulateur 15 reçoit les valeurs mesurées par le tachymètre 25 et par un capteur associé au levier de vitesse 26 ou pour un calcul du rapport de boîte de vitesse et qui indique quelle vitesse est engagée à cet instant. Ces deux valeurs parviennent à une carte 35 qui établit des cartographies utilisées dans un asservissements PID (proportionnel, intégral, différentiel). Un soustracteur 36 reçoit les valeurs de la pression de consigne à la sortie 32 de la carte 31 et de la pression mesurée par le capteur 19, les soustrait l'une de l'autre et les fournit à des modules 37 et 38 de calcul qui reçoivent aussi un résultat fourni par la sortie 39 de la carte 35 ; en fonction de ce résultat, les modules 37 et 38 calculent des termes proportionnels, intégraux et dérivés de la différence des pressions issue du soustracteur 36. Dans l'exemple présent, le module 37 calcule un terme de dérivée du premier ordre et le module 38 calcule un terme d'intégration sur une durée de quelques millièmes de secondes et un terme proportionnel. Le régulateur 15 comprend encore un additionneur 40 des sorties des modules 37 et 38 ainsi que de la valeur obtenue par la carte de pré-positionnement 33, qui fournit le signal de commande par sa sortie 41 à l'électrovanne 16. On doit mentionner aussi qu'un module limiteur 42 du signal, intégré indépendamment au régulateur 15, est conçu pour interdire l'ouverture ou la fermeture de l'électrovanne 16 au-delà de sa plage de fonctionnement linéaire en fonction des indications fournies par le tachymètre 25. Le signal à l'électrovanne 16 est alors issu d'un module de confection de signal 49 en fonction de la sortie de l'additionneur 40 et du module limiteur 42.

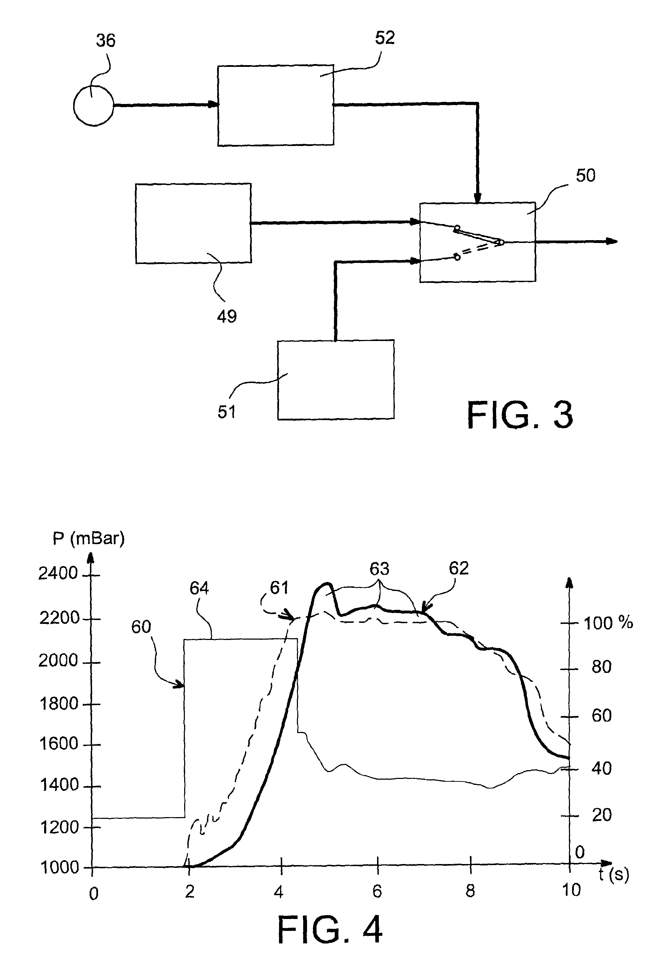

D'après les figures 2 et 3, un module d'état transitoire 50 est disposé à la sortie du module de confection 49 du signal de commande et peut soit transmettre le signal fourni par ce module, soit un signal fixe fourni par un module de production de signal d'état transitoire 51. Le module d'état transitoire 50 peut comprendre concrètement un commutateur commandé par un module de détection d'états transitoires 52. Le signal de commande fourni par le module d'état transitoire 50 prend une valeur fixe quand le signal du module de confection 49 est supplanté par le module 51, et il est activé quand les conditions suivantes sont réunies :
- la pression de consigne et la pression mesurée ont une différence supérieure à une valeur déterminée,
- la dérivée de cette différence est positive,
- et aucune contrainte de priorité supérieure n'existe pour le fonctionnement du moteur, comme l'existence d'un état particulier tel que le nettoyage du filtre à particules 13.

Le module de commande 52 est donc sensible au signal issu du soustracteur 36, qui exprime cette différence de pression, et il impose le signal d'état transitoire produit par le module 51 à l'électrovanne 16 jusqu'à ce que la dérivée de cette différence en fonction du temps devienne négative, c'est-à-dire que la différence décroisse et que la pression mesurée commence à converger vers la pression de consigne, et que la sortie du soustracteur 36 devient inférieure à un seuil où intervient un état de priorité supérieur.

Les courbes de figure 4 expriment le fonctionnement de l'invention pendant et après une grosse accélération qui commence au temps T = 2 s après l'origine des temps, en succédant immédiatement à une période de régime de ralenti où le rapport de fermeture des ailettes n'est que de 30% et le turbocompresseur 7 est à peu près inactif. La courbe 60 illustre le rapport de fermeture des ailettes demandé, la courbe 61 est la pression de consigne, et la courbe 62 la pression mesurée par le détecteur 19. La pression de consigne 61 s'accroît brusquement dès que l'accélération commence et continue de croître fortement tant que l'accélération se poursuit ; la courbe de la pression mesurée 62 s'élève d'abord lentement, puis de plus en plus rapidement à partir du début de l'accélération. La différence de ces pressions atteint le seuil de déclenchement du module d'état transitoire 50 presque tout de suite, de sorte que le signal de commande du rapport de fermeture des ailettes est porté à 100 % avec très peu de délai en formant un échelon 64 qui subsiste ici pendant un peu plus de deux secondes, jusqu'à ce que, l'inertie pneumatique du système de consigne 61 se faisant moins sentir ou la pression de consigne 61 augmentant moins, la pression mesurée 62 commence à rattraper la pression de consigne 61 : l'échelon 64 cesse alors, la commande ordinaire de l'électrovanne 16 reprend au moyen du module de confection 49 (qui n'a jamais cessé de recalculer le signal de commande) et le rapport de fermeture des ailettes tombe brusquement à 50 % puis à 40 % environ. La pression mesurée 62 continue d'augmenter, mais d'une quantité assez faible et ne dépasse temporairement la pression de consigne 61 que pendant deux ou trois "overshoots" 63, mais qui sont beaucoup moins importants que dans l'art antérieur. La convergence de la pression mesurée 62 vers la pression de consigne 61 et bonne et rapide.

Il devient donc possible sans inconvénient de commander une grande ouverture des ailettes aux bas régimes et basses vitesses.

## Revendications

1. Procédé de réglage d'un turbocompresseur (7) d'un moteur suralimenté (1), consistant à mesurer une pression d'air parvenant au moteur, à calculer une pression de consigne à fournir au moteur, une différence entre la pression de consigne et la pression mesurée, à traiter numériquement ladite différence, et à calculer finalement un signal de commande permettant de régler le turbocompresseur en fonction notamment de ladite différence traitée, **caractérisé en ce que** le signal de commande est remplacé temporairement par un signal de commande d'un état extrême du turbocompresseur, pour lequel une différence de pression maximale à travers la turbine (12) du turbocompresseur (7) est commandée, quand une condition d'état transitoire de régime du moteur est détectée.

2. Procédé de réglage d'un turbocompresseur suivant la revendication 1, **caractérisé en ce que** la condition d'état transitoire comprend une condition de dépassement d'un seuil par ladite différence entre la pression et la pression mesurée.

3. Procédé de réglage d'une turbocompresseur suivant la revendication 2, **caractérisé en ce que** la condition d'état transitoire comprend une condition de signe positif de dérivée temporelle de ladite différence entre la pression de consigne et la pression mesurée.
